# EUROPEAN PATENT APPLICATION

(11) **EP 4 809 799 A1**
(43) Date of publication of application: **23.09.2026**
(21) Application number: 24891798.1
(22) Date of filing: 15.11.2024
(51) Int. Cl.: A01B 69/00

(54) **AGRICULTURAL WORK VEHICLE**

(30) Priority: 16.11.2023 KR 20230159375; 14.11.2024 KR 20240162515
(71) Applicant: LS Mtron Ltd., Anyang-si, Gyeonggi-do 14119 (KR)
(72) Inventor: KIM, Yongrae, Anyang-si Gyeonggi-do 14119 (KR)
(74) Representative: K&L Gates LLP
(86) International application number: PCT/KR2024/018039
(87) International publication number: WO 2025/105852

(57) **Abstract**

There is provided a method of generating a pressure profile in an agricultural work vehicle. The method includes: receiving an operation mode input intended to select the operation mode of the agricultural work vehicle; generating a basic pressure profile when the selected operation mode is a basic mode, and generating a work pressure profile when the selected operation mode is a work mode; and controlling the hydraulic clutch of the agricultural work vehicle based on the generated pressure profile.

## Description

### Technical Field

The present disclosure relates to a method of reducing shift shock in agricultural work vehicles.

### Background Art

Agricultural work vehicles are vehicles used for agricultural work, and may refer to, for example, rice transplanters, combines, and tractors. For example, tractors can perform required agricultural tasks by moving with various implements attached thereto.

The power generated by the power generator (e.g., an engine, an electric motor, or the like) of an agricultural work vehicle is transmitted to wheels via a hydraulic clutch and a transmission. For example, the hydraulic clutch transmits power to or cuts off power from the transmission by engaging or disengaging multiple clutch disks, connected to the transmission and a flywheel fixed to the crankshaft of an engine, by using hydraulic pressure. Since the power generator of the agricultural work vehicle generates much higher torque than an engine used in an automobile, significant shock may occur at the moment the hydraulic clutch is engaged or disengaged.

Methods of adjusting the engagement and disengagement speed of a hydraulic clutch have been attempted to mitigate shift shock in agricultural work vehicles. However, the above methods adjust the engagement and disengagement speed of a hydraulic clutch based on the condition in which an agricultural work vehicle is unloaded (e.g., without an implement attached). Accordingly, they are not suitable for the operating environment of agricultural work vehicles in which various load conditions (e.g., a state in which an implement is attached to an agricultural work vehicle, work on level ground, work on a slope, and the like) occur.

### Disclosure

### Technical Problem

The present disclosure is intended to provide a method of generating a pressure profile by taking into considering the load conditions of an agricultural work vehicle.

### Technical Solution

According to one aspect of the present invention, there is provided a method of generating a pressure profile in an agricultural work vehicle, the method including: receiving an operation mode input intended to select the operation mode of the agricultural work vehicle; generating a basic pressure profile when the selected operation mode is a basic mode, and generating a work pressure profile when the selected operation mode is a work mode; and controlling the hydraulic clutch of the agricultural work vehicle based on the generated pressure profile; wherein a pressure in the fill phase of the basic pressure profile is a second pressure (P2); and wherein a pressure in the fill phase of the work pressure profile is a third pressure (P3) higher than the second pressure (P2).

In one embodiment, the method may further include receiving a shift response level input intended to select the shift response level of the agricultural work vehicle; and generating the work pressure profile may include determining the third pressure (P3) based on the selected shift response level.

In one embodiment, determining the third pressure (P3) may include determining the third pressure to be a larger value as the selected shift response level corresponds to a faster shift speed.

In one embodiment, generating the work pressure profile may further include generating a pressure in the speed phase of the work pressure profile based on the selected shift response level.

In one embodiment, the work pressure profile may include a soft landing phase, and a pressure in the soft landing phase may decrease from any pressure between a first pressure (P1), which is lower than the second pressure (P2), and the third pressure (P3) to the first pressure (P1).

In one embodiment, the method may further include receiving a shift response level input intended to select the shift response level of the agricultural work vehicle; generating the work pressure profile may include generating the pressure in the soft landing phase so that the pressure in the soft landing phase decreases linearly along a predetermined slope; and the predetermined slope may be generated based on the selected shift response level.

According to one aspect of the present invention, there is provided an agricultural work vehicle including: an operation mode switch configured to receive an operation mode input intended to select the operation mode of the agricultural work vehicle; a controller configured to generate a basic pressure profile when the selected operation mode is a basic mode and generate a work pressure profile when the selected operation mode is a work mode; and a hydraulic system configured to generate hydraulic pressure used to control a hydraulic clutch based on the generated pressure profile; wherein the controller generates a pressure in the fill phase of the basic pressure profile as a second pressure (P2), and generates a pressure in the fill phase of the work pressure profile as a third pressure (P3) higher than the second pressure (P2).

In one embodiment, the agricultural work vehicle may further include a shift response level switch configured to receive a shift response level input intended to select the shift response level of the agricultural work vehicle, and the controller may determine the third pressure (P3) based on the selected shift response level.

In one embodiment, the work pressure profile may include a soft landing phase, and the controller may generate a pressure in the soft landing phase so that the pressure in the soft landing phase decreases from any pressure between a first pressure (P1), which is lower than the second pressure (P2), and the third pressure (P3) to the first pressure (P1).

In one embodiment, the agricultural work vehicle may further include a shift response level switch configured to receive a shift response level input intended to select the shift response level of the agricultural work vehicle, the controller may generate the pressure in the soft landing phase so that the pressure in the soft landing phase decreases linearly along a predetermined slope, and the predetermined slope may be generated based on the selected shift response level.

### Advantageous Effects

The agricultural work vehicle according to one embodiment may generate a hydraulic profile intended to engage or disengage the hydraulic clutch by taking into consideration load conditions.

The agricultural work vehicle according to one embodiment may adjust the engagement force of the hydraulic clutch by taking into consideration load conditions.

The agricultural work vehicle according to one embodiment may mitigate shift shock in high-load situations.

### Description of Drawings

FIG. 1 is a block diagram showing the components of an agricultural work vehicle according to one embodiment;
FIG. 2 is a diagram illustrating a method of operating a shuttle lever according to one embodiment;
FIG. 3 is a flowchart illustrating an operation of generating a pressure profile according to one embodiment;
FIG. 4 is a graph illustrating a basic pressure profile according to one embodiment; and
FIGS. 5a and 5b are graphs illustrating work pressure profiles according to one embodiment.

### Mode for Invention

The terms used herein are selected from the most widely used general terms while taking into consideration the functions thereof herein, but may vary depending on the intention of engineers engaged in the relevant field, precedents, the advent of new technologies, and/or the like. In specific cases, there are terms selected by the applicant as desired, in which case the meanings thereof will be described in detail in corresponding descriptions. Accordingly, the terms used herein should be defined based on the meanings of the terms and the overall context of the present disclosure, rather than simply based on the names of the terms.

Singular expressions may include plural expressions unless the context clearly indicates otherwise. The terms used herein, including technical or scientific terms, may have the same meanings as commonly understood by those having ordinary skill in the art described herein.

In the present disclosure, the term "and/or" includes a combination of multiple related described components or any one of the multiple related described components.

The terms including ordinal numbers such as "first" and "second" used herein may be used to describe various components, but the components should not be limited by the terms. These terms are used only for the purpose of distinguishing one component from another.

In the present disclosure, the expression "at least one of a, b, and c" may refer to "a," "b," "c," "a and b," "a and c," "b and c," "all of a, b, and c," or variations thereof.

Throughout the present specification, when a part is described as "including" a component, this does not mean that another component may be excluded, but rather that another component may be included, unless otherwise stated. Furthermore, the term such as "part," "module," or the like used herein refers to a unit that handles at least one function or operation, which may be implemented by hardware or software or by a combination of hardware and software.

Embodiments of the present disclosure will be described in detail below with reference to the accompanying drawings so that those skilled in the art can easily practice the present disclosure. However, the present disclosure may be implemented in various different forms, and is not limited to the embodiments described herein. Furthermore, in order to clearly illustrate the present disclosure in the drawings, the parts that are not related to the description of the present disclosure are omitted, and similar parts are assigned similar reference symbols throughout the present specification. Furthermore, the reference symbols used in each drawing are only intended for describing each drawing, and different reference symbols used in different drawings do not necessarily designate different components.

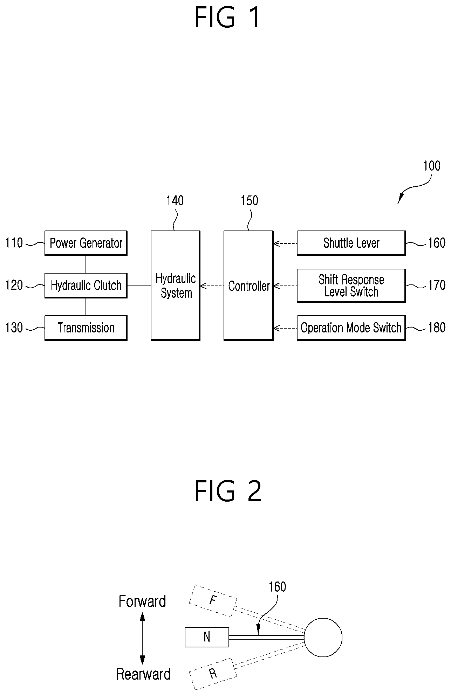

FIG. 1 is a block diagram showing the components of an agricultural work vehicle according to one embodiment.

Referring to FIG. 1, an agricultural work vehicle 100 may include a power generator 110, a hydraulic clutch 120, a transmission 130, a hydraulic system 140, a controller 150, a shuttle lever 160, a shift response level switch 170, and an operation mode switch 180. However, not all components shown in FIG. 1 are essential components. The agricultural work vehicle 100 may be implemented by more components or by fewer components than those shown in FIG. 1. For example, the agricultural work vehicle 100 may further include a sensor configured to measure the weight of an implement attached to the agricultural work vehicle 100 (e.g., a load cell, a pressure sensor, a piezoelectric sensor, or the like) and/or a sensor configured to measure the inclination of the agricultural work vehicle 100 (e.g., an accelerometer, a gyroscope, an inclinometer, a magnetometer, or the like).

The power generator 110 may generate the power required for the driving and working of the agricultural work vehicle 100. For example, the power generator 110 may be an engine or electric motor, but is not limited thereto.

The hydraulic clutch 120 may transmit the power, generated by the power generator 110, to or cut off the power from the transmission 130 by being engaged or disengaged by hydraulic pressure. For example, the hydraulic clutch 120 may include multiple clutch disks. Power may be transmitted to the transmission 130 when the hydraulic clutch 120 is engaged, while power to the transmission 130 may be cut off when the hydraulic clutch 120 is disengaged. The hydraulic clutch 120 may be disengaged and then engaged before and after the gear shifting of the transmission 130.

The engagement and disengagement speed of the hydraulic clutch 120 may vary depending on the rate of change of the hydraulic pressure supplied from the hydraulic system 140. For example, the engagement and disengagement speed of the hydraulic clutch 120 may increase when the rate of change of the hydraulic pressure is rapid, while the engagement and disengagement speed of the hydraulic clutch 120 may decrease when the rate of change of the hydraulic pressure is gradual. Relatively strong shift shock may occur when the engagement and disengagement speed of the hydraulic clutch 120 is high, while relatively weak shift shock may occur when the engagement and disengagement speed of the hydraulic clutch 120 is low.

The engagement force of the hydraulic clutch 120 may vary depending on the magnitude of the hydraulic pressure supplied from the hydraulic system 140. For example, the hydraulic clutch 120 may be engaged relatively strongly when the hydraulic pressure is high, while the hydraulic clutch 120 may be engaged relatively weakly when the hydraulic pressure is low. When the engagement force of the hydraulic clutch 120 is excessively large compared to the load conditions (e.g., whether an implement is attached, the weight of an attached implement, whether work is performed on level ground or on a slope, or the like), shift shock may occur and a power transmission system (e.g., the hydraulic clutch 120, the transmission 130, a drive shaft, a differential gear, or the like) may be damaged. When the engagement force of the hydraulic clutch 120 is excessively small compared to the load conditions, clutch slip may occur, resulting in power loss and damage to the hydraulic clutch 120 due to friction.

Accordingly, hydraulic pressure needs to be controlled such that the hydraulic clutch 120 is engaged at the strength and/or speed suitable for the load conditions of the agricultural work vehicle 100. As will be described later, a user may control the hydraulic pressure used to engage the hydraulic clutch 120 according to desired conditions (e.g., the load conditions, the type of work, or the like). For example, the user may control the hydraulic pressure generated by the hydraulic system 140 by selecting a shift response level via the shift response level switch 170.

The transmission 130 may convert the power, transmitted via the hydraulic clutch 120, into the speed and torque set according to the gear ratio, and transmit them to wheels. The transmission 130 may be controlled by the hydraulic pressure supplied from the hydraulic system 140. The transmission 130 may include a shuttle shift configured to switch the driving direction (e.g., the forward or reverse direction) of the agricultural work vehicle 100, a main transmission configured to convert the speed and torque of the agricultural work vehicle 100 in stages, and a sub-transmission configured to assist the main transmission in finely adjusting the speed and the torque. For example, when the main transmission is an 8-speed transmission and the sub-transmission is a 3-speed transmission, the transmission 130 may convert the transmitted power into 48 speeds and torques, including 24 speeds in the forward direction and 24 speeds in the reverse direction.

As shown in FIG. 2, the shuttle shift may change the driving direction of the agricultural work vehicle 100 based on the user's operation of the shuttle lever 160. The shuttle lever 160 may be operated in the forward and backward directions, but is not limited thereto. For example, the shuttle shift may change the driving direction of the agricultural work vehicle 100 to the forward direction when the user pushes the shuttle lever 160 forward to position it in a forward position F, while the shuttle shift may change the driving direction of the agricultural work vehicle 100 to the reverse direction when the user pulls the shuttle lever 160 rearward to position it in a reverse position R. When the user positions the shuttle lever 160 in a neutral position N, the shuttle shift may be in a neutral state.

However, the shape of the shuttle lever 160 is not limited to the shape shown in FIG. 2. For example, the shuttle lever 160 may be implemented to include a plurality of buttons (e.g., a forward button, a neutral button, and a reverse button).

The main transmission may be shifted based on the user's operation of a main shift lever (not shown) or shift buttons (e.g., a plus (+) button and a minus (-) button). For example, the main transmission may be a power-shift transmission that is shifted using the hydraulic pressure supplied from the hydraulic system 140, but is not limited thereto.

The sub-transmission may be shifted based on the user's operation of a sub-shift lever (not shown).

The hydraulic system 140 may generate the hydraulic pressure used to engage or disengage the hydraulic clutch 120 based on a control signal from the controller 150. The hydraulic system 140 may generate the hydraulic pressure used to control the transmission 130 based on a control signal from the controller 150. The hydraulic system 140 may include, but is not limited to, a hydraulic pump configured to apply pressure to hydraulic oil, a hydraulic control valve configured to regulate the flow of hydraulic oil, a hydraulic oil tank configured to store hydraulic oil, and a hydraulic filter configured to filter out the impurities that may be contained in hydraulic oil.

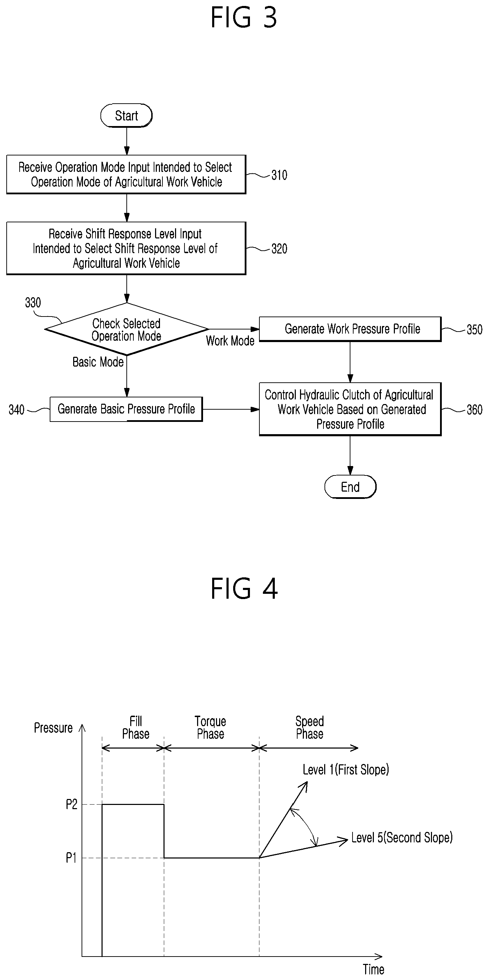

The controller 150 may generate a pressure profile based on an operation mode selected by the user. The pressure profile may represent the hydraulic pressure over time that the hydraulic system 140 has to generate to engage or disengage the hydraulic clutch 120 during gear shifting. An operation in which the controller 150 generates the pressure profile will be described later with reference to FIGS. 3 to 5b.

The controller 150 may generate a control signal corresponding to the pressure profile and transmit it to the hydraulic system 140. The hydraulic system 140 may generate hydraulic pressure corresponding to the pressure profile based on the control signal of the controller 150.

The controller 150 may include memory (not shown) configured to store one or more instructions or programs, and a processor (not shown) configured to enable the controller 150 to perform the operation of generating a pressure profile and transmitting it to the hydraulic system 140 by executing the one or more instructions or programs.

For example, the memory may include, but is not limited to, at least one of flash memory, a hard disk, Random Access Memory (RAM), Static Random Access Memory (SRAM), Read-Only Memory (ROM), Electrically Erasable Programmable Read-Only Memory (EEPROM), and Programmable Read-Only Memory (PROM).

For example, the processor may include, but is not limited to, at least one of a Central Processing Unit (CPU), a microprocessor, an Application Processor (AP), a Graphics Processing Unit (GPU), an Application-Specific Integrated Circuit (ASIC), a Digital Signal Processor (DSP), and an Electronic Control Unit (ECU).

The shift response level switch 170 may receive a shift response level input intended to select the shift response level of the agricultural work vehicle 100 from the user. The shift response level is intended to control the shift shock felt by the user during gear shifting by controlling the engagement speed of the hydraulic clutch 120 via hydraulic pressure. For example, the shift shock felt by the user during gear shifting may increase when the hydraulic pressure is increased to increase the engagement speed of the hydraulic clutch 120, while the shift shock felt by the user during gear shifting may decrease when the hydraulic pressure is decreased to reduce the engagement speed of the hydraulic clutch 120. As will be described below, the hydraulic pressure may be controlled by the hydraulic system 140.

The shift response level may correspond to the engagement and disengagement speed of the hydraulic clutch 120. For example, the shift response level may be one of levels 1 to 5. In the above example, level 1 may correspond to the highest speed, and level 5 may correspond to the lowest speed. For example, the shift response level switch 170 may include a plus (+) switch and a minus (-) switch, and a default shift response level may be level 3. In this example, the user may select level 1 by pressing the plus (+) switch twice, and may select level 5 by pressing the minus (-) switch twice. However, the number of shift response levels and the configuration of the shift response level switch 170 are not limited thereto. For example, the shift response level may be one of six or more levels, and the shift response level switch 170 may be implemented as a rotary switch that allows the shift response level to be selected by turning the switch.

The operation mode switch 180 may receive an operation mode input intended to select an operation mode from the user. The operation mode may include a basic mode and a work mode. The basic mode may correspond to a case where the agricultural work vehicle 100 is in an empty state or is driving on a general road that is not a work area. The work mode may correspond to a state where an implement is attached to the agricultural work vehicle 100. In the present disclosure, the basic mode may be referred to as the "general mode" or the "driving mode."

For example, the user may select the basic mode by inputting a shift response level via the shift response level switch 170 without pressing the operation mode switch 180, and may select the work mode by inputting a shift response level via the shift response level switch 170 while pressing the operation mode switch 180.

The operation mode switch 180 may be a switch already installed in the agricultural work vehicle 100 to perform another function, other than a switch dedicated to the selection of the operation mode. For example, the operation mode switch 180 may be a "CAL/SEL" switch configured to adjust the size of the tires of the agricultural work vehicle 100. The agricultural work vehicle 100 according to one embodiment may utilize an existing switch without adding a new switch in order to select the operation mode.

FIG. 3 is a flowchart illustrating an operation of generating a pressure profile according to one embodiment.

The operations of FIG. 3 may be performed by the agricultural work vehicle 100 when the processor included in the controller 150 executes one or more instructions or programs stored in the memory. Although operations for engaging the hydraulic clutch 120 will be described below, the present disclosure is not limited thereto, and may be applied to operations for disengaging the hydraulic clutch 120 in a similar manner.

In operation 310, the agricultural work vehicle 100 may receive an operation mode input intended to select the operation mode of the agricultural work vehicle 100. The agricultural work vehicle 100 may receive the operation mode input via the operation mode switch 180.

In operation 320, the agricultural work vehicle 100 may receive a shift response level input intended to select the shift response level of the agricultural work vehicle 100. The agricultural work vehicle 100 may receive the shift response level input via the shift response level switch 170.

For example, the user may select a basic mode by inputting a shift response level via the shift response level switch 170 without pressing the operation mode switch 180, and may select a work mode by inputting a shift response level via the shift response level switch 170 while pressing the operation mode switch 180.

In operation 330, the agricultural work vehicle 100 may check the selected operation mode.

In operation 340, the agricultural work vehicle 100 may generate a basic pressure profile when the operation mode is the basic mode. The basic mode may correspond to a case where the agricultural work vehicle 100 is in an empty state or is driving on a general road that is not a work area.

Referring to FIG. 4, the basic pressure profile may include a fill phase, a torque phase, and a speed phase.

The fill phase may correspond to a process in which the hydraulic system is filled with the hydraulic oil required to engage the hydraulic clutch 120.

In the fill phase, the hydraulic pressure may be generated as a second pressure P2. In the fill phase, a hydraulic pressure higher than in other phases is required because the hydraulic clutch 120 starts to move to be engaged.

The torque phase may correspond to a process in which the hydraulic clutch 120 is engaged by hydraulic pressure and the power generated by the power generator 110 starts to be transmitted to the transmission 130.

In the torque phase, the hydraulic pressure may be generated as a first pressure P1. The first pressure P1 may be lower than the second pressure P2. There is required the engagement force that is suitable for preventing damage to the power transmission system while minimizing power loss during a power transmission process. By generating the first pressure P1 so that it is lower than the second pressure P2, the engagement force of the hydraulic clutch 120 may be finely controlled.

The speed phase may correspond to a process in which, while the agricultural work vehicle 100 performs agricultural work, the hydraulic clutch 120 is maintained without being disengaged by external force so that power can be continuously transmitted.

In the speed phase, the hydraulic pressure may be set based on the shift response level. In an example in which the shift response level is one of levels 1 to 5, the hydraulic pressure may be set to increase along a first slope when the shift response level is level 1, and may be set to increase along a second slope when the shift response level is level 5. In this case, the first slope may be set to be steeper than the second slope. In the above example, when the shift response level is one of levels 2 to 4, the hydraulic pressure may increase along a slope that is gentler than the first slope and steeper than the second slope.

Referring again to FIG. 3, in operation 350, when the operation mode is a work mode, the agricultural work vehicle 100 may generate a work pressure profile. The work mode may correspond to a state in which an implement is attached to the agricultural work vehicle 100.

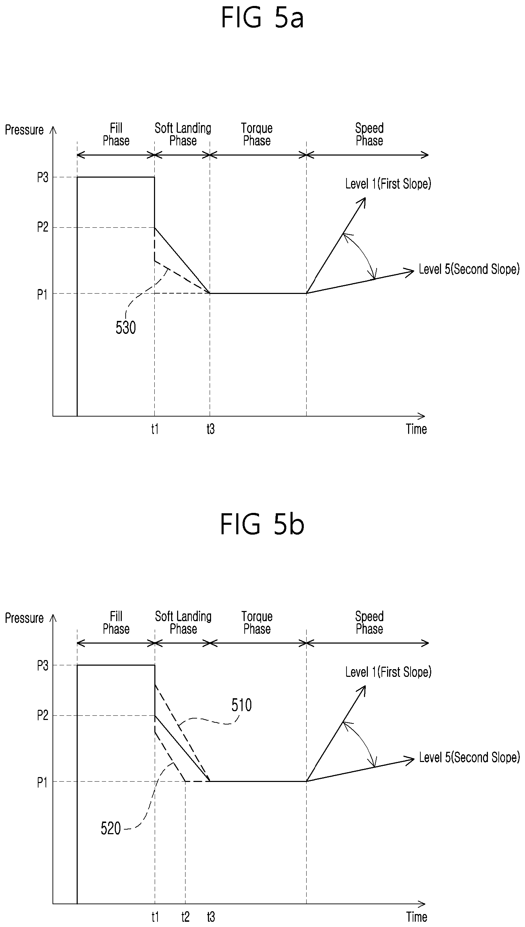

Referring to FIG. 5a, the work pressure profile may include a fill phase, a soft landing phase, a torque phase, and a speed phase. Since the hydraulic settings in the torque phase and the speed phase are the same as those in the basic pressure profile, only the hydraulic settings in the fill phase and the soft landing phase will be described here.

The fill phase and the soft landing phase may correspond to a process in which the hydraulic system is filled with the hydraulic oil required to engage the hydraulic clutch 120.

In the fill phase, the hydraulic pressure may be set to a third pressure P3. The third pressure P3 may be higher than the second pressure P2. The third pressure P3 may be determined based on the load conditions of the agricultural work vehicle 100. For example, the third pressure P3 may be determined to be higher as the weight of an implement attached to the agricultural work vehicle 100 increases.

In an example in which the agricultural work vehicle 100 does not include a sensor configured to measure the weight of an implement, the third pressure P3 may be determined based on a shift response level selected by the user. The user may select a shift response level corresponding to a slower speed (e.g., level 4 or level 5) to mitigate shift shock as the weight of the implement increases. Conversely, the user may select a shift response level corresponding to a faster speed (e.g., level 1 or level 2) as the weight of the implement decreases. Therefore, the agricultural work vehicle 100 may set the third pressure P3 to a relatively high speed when it receives a user input intended to select a level corresponding to a slow speed, and may set the third pressure P3 to a relatively low speed when it receives a user input intended to select a level corresponding to a fast speed.

In an example in which the agricultural work vehicle 100 includes a sensor configured to measure the weight of an implement, the third pressure P3 may be determined based on the weight of an implement measured by the sensor.

In the soft landing phase, the hydraulic pressure may be set to decrease from any pressure between a first pressure P1, which is lower than the second pressure P2, and the third pressure P3 to the first pressure P1. In this case, the hydraulic pressure may be set to decrease linearly along a predetermined slope. The predetermined slope may be determined based on the load conditions of the agricultural work vehicle 100. For example, the predetermined slope may be determined to be gentler (i.e., to have a smaller absolute value) as the weight of an implement attached to the agricultural work vehicle 100 increases.

In an example in which the agricultural work vehicle 100 does not include a sensor configured to measure the weight of an implement, the predetermined slope may be determined based on a shift response level selected by the user. The agricultural work vehicle 100 may set the predetermined slope to a relatively gentle slope (i.e., a smaller absolute value) when it receives an user input intended to select a level corresponding to a slow speed, and may set the predetermined slope to a relatively steep slope (i.e., a larger absolute value) when it receives an user input intended to select a level corresponding to a fast speed.

In an example in which the agricultural work vehicle 100 includes a sensor configured to measure the weight of an implement, the predetermined slope may be determined based on the weight of an implement measured by the sensor.

For example, as indicated by 510 of FIG. 5a, when the determined slope is steeper than the slope decreasing from the second pressure P2 at time t1 to the first pressure P1 at time t3, the pressure in the soft landing phase may decrease linearly from a specific pressure between the second pressure P2 and third pressure P3 at time t1 to the first pressure P1 at time t3.

For example, as indicated by 520 of FIG. 5a, when the determined slope is steeper than the slope decreasing from the second pressure P2 at time t1 to the first pressure P1 at time t3, the pressure in the soft landing phase may decrease linearly from a specific pressure between the first pressure P1 and second pressure P2 at time t1 to the first pressure P1 at time t2. In this case, the time at which the soft landing phase ends may be advanced from t3 to t2.

For example, as indicated by 530 of FIG. 5b, when the determined slope is gentler than the slope decreasing from the second pressure P2 at time t1 to the first pressure P1 at time t3, the pressure in the soft landing phase may decrease linearly from a specific pressure between the first pressure P1 and the second pressure P2 at time t1 to the first pressure P1 at time t3, as indicated by 530.

The difference between the third pressure P3 and the first pressure P1 is larger than the difference between the second pressure P2 and the first pressure P1. Accordingly, when the hydraulic pressure changes rapidly from the third pressure P3 to the first pressure P1, the hydraulic clutch 120 may be momentarily disengaged, thereby causing the power to be cut off. The agricultural work vehicle 100 according to one embodiment may resolve the problem of the power cut-off caused by a rapid pressure difference by setting the hydraulic pressure so that it decreases linearly during the soft landing phase.

Referring again to FIG. 3, in operation 360, the agricultural work vehicle 100 may control the hydraulic clutch 120 based on the generated pressure profile. For example, the controller 150 may generate a control signal corresponding to the pressure profile and transmit it to the hydraulic system 140. The hydraulic system 140 may generate hydraulic pressure corresponding to the pressure profile based on the control signal from the controller 150. The hydraulic clutch 120 may be engaged or disengaged according to the hydraulic pressure of the hydraulic system 140.

In one embodiment, when a work mode is selected, the agricultural work vehicle 100 may activate one or more other functions associated with the work mode. For example, the agricultural work vehicle 100 may activate an EZ brake function. The EZ brake function may refer to a function of enabling the agricultural work vehicle 100 to be stopped by simply pressing the brake pedal without the need for the user to position the shuttle lever 160 to a neutral position or to press an inching pedal to disengage the hydraulic clutch 120. For example, even when the design is made such that the EZ brake function is activated only by receiving a separate activation command, the agricultural work vehicle 100 according to one embodiment may automatically activate the EZ brake function when the work mode is selected to help the user perform the work more conveniently.

The above-described embodiments of the present disclosure may be implemented in the form of a storage medium containing computer-executable instructions, such as program modules executed by a computer. A computer-readable medium may include any volatile and non-volatile media and removable and non-removable media that can be accessed by a computer. Furthermore, the computer-readable medium may include computer storage media and communication media. The computer storage media may include volatile and non-volatile and removable and non-removable media implemented by any method or technique for storing information such as computer-readable instructions, data structures, program modules, or other types of data. The communication media may include other types of data of modulated data signals, such as computer-readable instructions, data structures, or program modules.

The above description of the present disclosure is intended for illustrative purposes only. Those of ordinary skill in the art to which the present disclosure pertains will understand that the present disclosure may be modified into other specific forms without altering the technical spirit or essential features of the present disclosure. Accordingly, all of the above descriptions should be understood as illustrative and not limiting. For example, each component described in a single form may be implemented in a distributed form, and likewise, components described in a distributed form may be implemented in a combined form.

The scope of the present disclosure is defined by the claims set forth below rather than by the detailed description above, and all modifications or variations derived from the meanings and scope of the claims and equivalents thereof should be interpreted as being included within the scope of the present disclosure.

## Claims

1. A method of generating a pressure profile in an agricultural work vehicle, the method comprising:
receiving an operation mode input intended to select an operation mode of the agricultural work vehicle;
generating a basic pressure profile when the selected operation mode is a basic mode, and generating a work pressure profile when the selected operation mode is a work mode; and
controlling a hydraulic clutch of the agricultural work vehicle based on the generated pressure profile;
wherein a pressure in a fill phase of the basic pressure profile is a second pressure (P2); and
wherein a pressure in a fill phase of the work pressure profile is a third pressure (P3) higher than the second pressure (P2).

2. The method of claim 1, further comprising receiving a shift response level input intended to select a shift response level of the agricultural work vehicle;
wherein generating the work pressure profile comprises determining the third pressure (P3) based on the selected shift response level.

3. The method of claim 2, wherein determining the third pressure (P3) comprises determining the third pressure to be a larger value as the selected shift response level corresponds to a faster shift speed.

4. The method of claim 2, wherein generating the work pressure profile further comprises generating a pressure in a speed phase of the work pressure profile based on the selected shift response level.

5. The method of claim 1, wherein:
the work pressure profile comprises a soft landing phase; and
a pressure in the soft landing phase decreases from any pressure between a first pressure (P1), which is lower than the second pressure (P2), and the third pressure (P3) to the first pressure (P1).

6. The method of claim 5, further comprising receiving a shift response level input intended to select a shift response level of the agricultural work vehicle;
wherein generating the work pressure profile comprises generating the pressure in the soft landing phase so that the pressure in the soft landing phase decreases linearly along a predetermined slope; and
wherein the predetermined slope is generated based on the selected shift response level.

7. An agricultural work vehicle comprising:
an operation mode switch (180) configured to receive an operation mode input intended to select an operation mode of the agricultural work vehicle (100);
a controller (150) configured to generate a basic pressure profile when the selected operation mode is a basic mode and generate a work pressure profile when the selected operation mode is a work mode; and
a hydraulic system (140) configured to generate hydraulic pressure used to control a hydraulic clutch based on the generated pressure profile;
wherein the controller (150):
generates a pressure in a fill phase of the basic pressure profile as a second pressure (P2); and
generates a pressure in a fill phase of the work pressure profile as a third pressure (P3) higher than the second pressure (P2).

8. The agricultural work vehicle of claim 7, further comprising a shift response level switch (170) configured to receive a shift response level input intended to select a shift response level of the agricultural work vehicle;
wherein the controller (150) determines the third pressure (P3) based on the selected shift response level.

9. The agricultural work vehicle of claim 7, wherein:
the work pressure profile comprises a soft landing phase; and
the controller (150) generates a pressure in the soft landing phase so that the pressure in the soft landing phase decreases from any pressure between a first pressure (P1), which is lower than the second pressure (P2), and the third pressure (P3) to the first pressure (P1).

10. The agricultural work vehicle of claim 9, further comprising a shift response level switch (170) configured to receive a shift response level input intended to select a shift response level of the agricultural work vehicle;
wherein the controller (150) generates the pressure in the soft landing phase so that the pressure in the soft landing phase decreases linearly along a predetermined slope; and
wherein the predetermined slope is generated based on the selected shift response level.
